(19) Europäisches Patentamt
European Patent Office
Office européen des brevets

(11) Veröffentlichungsnummer: **0 000 767**
**B1**

(12) **EUROPÄISCHE PATENTSCHRIFT**

(21) Anmeldenummer: **78100567.3**

(22) Anmeldetag: **02.08.78**

(51) Int. Cl.[3]: **C 07 F 9/30, A 01 N 57/18**

# (54) Glycylmethyl-phosphinsäurederivate, ihre Herstellung und Verwendung

(30) Priorität: **11.08.77 CH 9883/77**

(43) Veröffentlichungstag der Anmeldung: **21.02.79 Patentblatt 79/04**

(45) Bekanntmachung des Hinweises auf die Patenterteilung: **26.11.80 Patentblatt 80/24**

(84) Benannte Vertragsstaaten: **BE CH DE FR GB NL**

(56) Entgegenhaltungen:
**DE - A - 1 620 044**
**US - A - 3 853 530**

(73) Patentinhaber: **CIBA-GEIGY AG**
**Patentabteilung Postfach**
**CH - 4002 Basel (CH)**

(72) Erfinder: **Maier, Ludwig, Dr.**
**Im Lee 28**
**CH - 4144 Arlesheim (CH)**

**EP 0 000 767 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Glycylmethyl-phosphinsäurederivate, ihre Herstellung und Verwendung

Die vorliegende Erfindung betrifft neue Glycylmethylphosphinsäurederivate, Verfahren zur Herstellung derselben sowie die Verwendung der neuen Derivate als Wirkstoffe herbizider und pflanzenwachstumregulierender Mittel.

Für ähnliche Zwecke sind in der USA-Patentschrift No. 3 853 530 schon N-Phosphonomethylglycin und Derivate davon in Vorschlag gebracht worden.

Die erfindungsgemässen neuen Glychlmethyl-phosphinsäurederivate besitzen die allgemeine Formel I

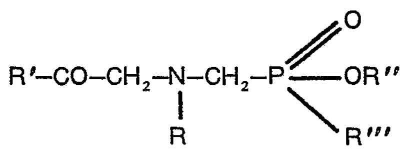
(I)

In dieser Formel bedeuten:

- R Wasserstoff, einen $C_1$—$C_6$ Alkylrest, die Gruppe HOOC—$CH_2$—, ferner Benzyl, Diphenylmethyl oder Triphenylmethyl,
- R′ eine Gruppe —OH oder —$OR_1$, worin $R_1$ ein Kation, ein $C_1$—$C_6$ Alkylrest, ein $C_2$—$C_3$ Alkenylrest, den Propargylrest oder R′ die Aminogruppe darstellt,
- R″ Wasserstoff, ein Kation, nieder Alkyl oder Hydroxyalkyl,
- R‴ einen $C_1$—$C_4$ Alkylrest, der durch Hydroxy, Halogen oder Carboxygruppen ein- oder mehrfach substitutiert sein kann, oder einen gegebenfalls substituierten Phenylrest.

Vorzugsweise ist R Wasserstoff oder ein leicht abspaltbarer Rest (benzyl, tert.Butyl, Di- oder Triphenylmethyl).

Falls R′ die —OH Gruppe und/oder R″ Wasserstoff ist, die Verbindungen der Formel I also mindestens eine freie Säuregruppe besitzen, so sind solche Säuren befähigt, Salze mit Basen zu bilden und zwar sowohl mittels der Carbonsäure- als auch mittels der Phosphinsäuregruppe. Als Salze kommen die Ammonium- und Metallsalze der Alkali- und Erdalkalimetalle (Li, Na, K, Ca, Mg), aber auch anderer Metalle wie Fe, und Salze von Aminen, wie Alkyl- und Alkylaminen, oder von quaternären Ammoniobasen in Betracht; Beispiele von Aminen sind: Methylamin, Isopropylamin, tert.Butylamin, Allylamin.

Wenn $R_1$ ein niederer Alkenyl-, Alkinyl oder ein Alkylrest ist, sind die Endstoffe Ester.

R″ ist nieder Alkyl, aber vorzugsweise Wasserstoff oder ein Kation der Art, wie für R′ beschrieben. Beispiel eines Hydroxyalkylrestes R″ ist β-Hydroxyäthyl.

R‴ ist vorzugsweise ein $C_1$—$C_4$ Alkylrest, insbesondere Methyl oder Aethyl. Von den substituierten Alkylresten seien Hydroxymethyl, Trichlormethyl, Dichlormethyl, Trifluormethyl, β-Chloräthyl etc. genannt. Falls ein Phenylrest R‴ substituiert ist, kommen als Substituenten in erster Linie Halogenatome, niedere Alkyl- und Halogenalkylgruppen sowie Dialkylaminogruppen isn Betracht.

Unterphosphorige Säure reagiert mit Aldehyden RCHO (R = Kohlenwasserstoffrest) und sekundären Aminen unter Bildung von N-disubstituierten Aminomethylphosphinen mit bakterizider Wirksamkeit (DE-A-1620044).

Es ist ferner bekannt, dass unterphosphorige Säure mit Formaldehyd und Piperidin (unsubstituiertes sekundäres Amin) in stark salzsaurer Lösung das Hydrochlorid der Bis(piperidinomethyl)-phosphinsäure ergibt [Helv. Chim. Acta *50*, 1742 (1967)].

Es waren kürzlich auch Versuche erfolgreich, Formaldehyd und unterphosphorige Säure mit funktionell substituierten sekundären Aminen, wie N-substituierten Glycinen, zu Bis(glycylmethyl)phosphinsäuren umzusetzen.

Es wurde nun gefunden, dass eine ähnliche Umsetzung auch mit entsprechenden Alkyl- und Arylphosphonigen Säuren zu Glycylmethyl-alkyl(oder aryl-)phosphinsäuren führt.

Das erfindungsgemässe Verfahren zur Herstellung der neuen Glycylmethyl-phosphinsäurederivate der Formel I ist dadurch gekennzeichnet, dass man ein N-substituiertes Glycin der Formal II.

$$HOOC-CH_2-NH-R_2 \qquad (II)$$

worin $R_2$ einen $C_1$—$C_6$ Alkylrest, vorzugsweise einen abspaltbaren Alkylrest wie tert.Butyl, den Benzyl-, Di- oder Triphenylmethyl-Rest oder die Gruppe —$CH_2COOH$ bedeutet, mit Formaldehyd und einer phosphonigen Säure der Formel III

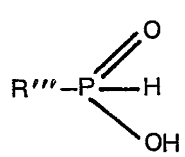
(III)

worin R''' wei unter Formel I definiert ist, in saurem wässerigem Milieu umsetzt und das erhaltene Glycylmethyl-phosphinsäurederivat der Formel Ia

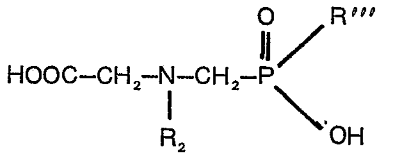

(Ia)

gewünschtenfalls durch Abspaltung einer abspaltbaren Gruppe $R_2$ und/oder weiteren Nachoperationen in ein Salz bezw. anderes Derivat der Formel I überführt.

Im Ausgangs-glycin der Formel II ist $R_2$ vorzugseise ein abspaltbarer Rest, wie tert.Butyl, Benzyl, Di- oder Tri-phenylmethyl, oder aber eine weitere Essigsäuregruppe $-CH_2COOH$.

Anstatt die phosphonige Säure der Formel III als solche im Reaktionsgemisch vorzulegen, kann auch ein entsprechendes Dihalogenphosphin, insbesondere Dichlorphosphin der Formel $R'''-PCl_2$ verwendet werden, welches im wässerigen sauren Reaktionsmedium sofort zum Phosphonigsäurederivat der Formel III hydrolysiert wird.

Die Umsetzung wird vorteilhaft in stark salzsaurem Milieu ($pH<5$) durchgeführt, bei Temperaturen von 20—100°C und dauert etwa 2 bis 4 Stunden. Um Oxidationen der phosphonigen Säuren zu vermeiden, arbeitet man vorteilhaft unter Ausschluss von Sauerstoff. Gute Ausbeuten werden besonders dann erhalten wenn ein Formaldehyd-Ueberschuss verwendet wird.

Ist R''' im Ausgangsstoff III und im Endprodukt Ia ein Alkylrest, so erhält man letzteres in Form des Hydrochlorids. Ist R''' hingegen ein elektronegativer Substituent, wie Hydroxymethyl, Trichlormethyl, Chloräthyl oder Phenyl, kristallisieren die Endprodukte der Formel Ia ohne HCl, d.h. das Phosphinsäureproton ist so sauer, dass die erhaltenen Säuren ein inneres Betain bilden.

Hat man einen Ausgangsstoff der Formel II gewählt, in welchem $R_2$ eine abspaltbare Gruppe ist, so kann man nach der Umsetzung zum Phosphinsäurederivat Ia die Gruppe $R_2$ abspalten.

Als abspaltbare Reste $R_2$ kommen tertiäre $C_4$—$C_6$ Alkylreste, insbesondere tert.Butyl oder aromatisch substituierte Methylgruppen wie insbesondere Benzyl, sowie Diphenylmethyl und Triphenylmethyl in Betracht.

Die Abspaltung eines phenylierten Methylrestes, insbesondere Benzyl, erfolgt am besten durch katalytrische Hydrierung (katalytische Debenzylierung) mit Wasserstoff in einem Lösungsmittel, wie Wasser, Eisessig, wässerige Essigsäure oder einem Wasser-Aethanolgemisch.

Geeigneter Katalysator ist Palladium (5%) auf Kohle; man kann aber auch Platinoxyd oder Platin/Kohle verwenden. Die Hydrierung erfolgt vorzugsweise bei Normaldruck und Temperaturen zwischen 20 und 50°C und dauert je nach abspaltendem Rest $R_2$ zwischen 10 Minuten bis 20 Stunden.

Eine weitere Möglichkeit der Abspaltung dieser abspaltbaren Reste $R_2$ unter Einschluss tertiärer Alkylreste, wie insbesondere tert.Butyl, besteht darin, dass man eine Säure der Formel Ia oder ein Salz derselben (z.B. das Hydrochlorid) bei 100—200° mit HBr in Wasser oder Eisessig, gegebenenfalls unter Druck, ein bis 10 Stunden behandelt.

Die so erhaltenen Derivate der Formel I mit R = Wasserstoff sind sowohl als Säuren wie auch als Salze wasserlöslich und temperaturstabil. Die Ueberführung von Säuren der Formal I in entsprechende Salze, Ester oder Amide erfolgt nach für solche Umsetzungen bekannten Techniken, wie Neutralisieren, Behandlung alkoholischer Suspensionen mit HCl, etc. Säuren der Formel I (R' = OH, R und R'' sind je Wasserstoff) sind kristalline weisse Festkörper mit hohen Zersetzungspunkten. Sie lassen sich mit 0,1 normaler Tetramethylammoniumhydroxyd-Lösung in Wasser als zweibasige Säuren mit 2 Potentialsprüngen titrieren. So sind beispielsweise die pK-Werte der Säure, in welcher R''' Methyl ist 3,13 bzw. 8,32. Es ist anzunehmen, dass alle diese Säuren als Betaine vorliegen, in welche Richtung auch die starke pH-Abhängigkeit der $^{31}P$-chemischen Verschiebung deutet. Mit grosser Wahrscheinlichkeit ist das Phosphinsäureproton R'' und nicht das Carbonsäureproton R' an der Betain-Bildung beteiligt.

Die als Ausgangsstoffe verwendeten N-substituierten Glycine der Formel II sowie die phosphonigen Säuren der Formel III bzw. die durch Hydrolyse diese Säuren ergebenden Dichlorphosphine der Formel $R'''-PCl_2$ sind bekannt ["Organic Phosphorus Compounds", ed. G. M. Kosolapoff und L. Maier, John Wiley & Sons, New York 1972, Vol. 4, Kapitel 8 und 10].

Nachstehend wird die Herstellung erfindungsgemässer Glycylmethyl-phosphinsäurederivate der Formel I anhand einiger Ausführungsbeispiele beschrieben. Alle Temperaturangaben beziehen sich auf Celsiusgrade.

## Beispiel 1

Zu 240 ml Wasser werden langsam 104,8 g (0,8 Mol) Aethyl-dichlorphosphin $C_2H_5PCl_2$ zugetropft. Dann gibt man 161,4 g (0,8 Mol) N-Benzylglycin-hydrochlorid $C_6H_5-CH_2-NH-CH_2-COOH.HCl$ und 240 ml konzentrierte Salzsäure zu, erhitzt zum Rückfluss und tropft dann 127,2 ml 35%ige Formaldehydlösung (= 1,6 Mol) zu.Nach 4 Std. lässt man 14 Std. bei 20° weiterrühren und dampft dann am Rotavap zur Trockene ein. Man erhält einen leicht gelben, festen Rückstand, den man in 1500 ml Aceton aufschwemmt und dann filtriert. Als Filterrückstand erhält man 172,4 g eines weissen, kristallinen Festkörpers vom Smp. 174—176° (Zers.). Durch Konzentration des Filtrates erhält man weiter 32, 3 g vom Smp. 178—181°. Gesamtausbeute 83,1%.
Das erhaltene Produkt ist das (N-Benzylglycylmethyl)-äthyl-phosphinsäurehydrochlorid der Formel

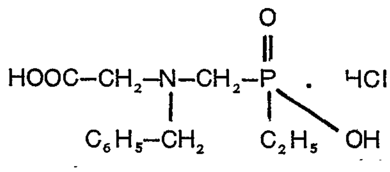

(Verbindung 1)

Analyse:

$C_{12}H_{18}NO_4P \cdot HCl$ (307,7)

| | | | | | |
|---|---|---|---|---|---|
| ber: | C 46,84 | H 6,23 | N 4,55 | Cl 11,52 | P 10,07% |
| gef: | C 46,9 | H 6,1 | N 4,9 | Cl 11,7 | P 10,1% |

$^{31}P$ (in $D_2O$) = − 38,7 ppm

Die Säure lässt sich mit Tetramethylammoniumhydroxyd als dreibasige Säure titrieren.

Beispiel 2

Man verwendet 58,5 g (0,5 Mol) Methyldichlorphosphin $CH_3PCl_2$, 150 ml Wasser, 100,9 g (0,5 Mol) N-Benzylglycin-hydrochlorid, 79,5 ml 35%-ige Formaldehydlösung und 150 ml konz. Salzsäure und verfährt wie im Beispiel 1. Nach Eindampfen der klaren Lösung am Rotavap erhält man 146 g (100%) (N-Benzylglycylmethyl)-methylphosphinsäure-hydrochlorid der Formel

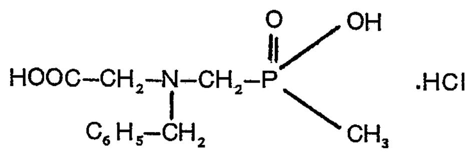

(Verbindung 2)

als hygroskopische feste weisse Substanz in reiner Form vom Schmelzpunkt 60—65%.

Analyse:
$C_{11}H_{16}NO_4P \cdot HCl$ (293,68)

| | | | | | |
|---|---|---|---|---|---|
| ber: | C 44,99 | H 5,83 | N 4,77 | Cl 12,07 | P 10,55% |
| gef: | C 42,3 | H 6,2 | N 4,9 | Cl 12,0 | P 10,2% |

$^{31}P$(in $D_2O$) = −34,4 ppm

Beispiel 3

Ausgehend von 9,6 g (0,1 Mol) Hydroxymethyl-phosphoniger Säure

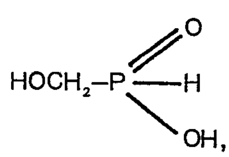

20,2 g (0,1 Mol) N-Benzylglycinhydrochlorid, 100 ml konz. Salzsäure und 31,6 g 38%-ige Formaldehydlösung verfährt man, wie in Beispiel 1 beschrieben. Nach Eindampfen am Rotavap erhält man 22,7 g (88%) (N-Benzylglycylmethyl)-hydroxymethylphosphinsäure der Formel

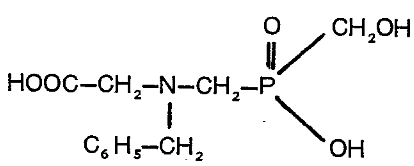

(Verbindung 3)

als glasige Masse, die bei 92° sintert, bei 118° flüssig wird und sich bei 135° zersetzt.

Beispiel 4

Ausgehend von 16,5 g (0,09 Mol Trichlormethylphosphoniger Säure

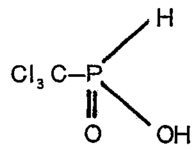

in 20 ml Wasser, 18,5 g (0,09 Mol) $C_6H_5Cl_2$—NH—$CH_2COOH.HCl$ 14,3 ml 35%ige Formaldehydlösung und 10 ml konz. Salzsäure verfährt man wie in Beispiel 1. Nach 12 Stunden Stehen bei Raumtemperatur wird das Reaktionsgemisch in Wasser aufgeschlämmt und filtriert. Man erhält schliesslich 23 g (71%) (N-Benzylglycylmethyl)-trichlormethyl-phosphinsäure der Formel

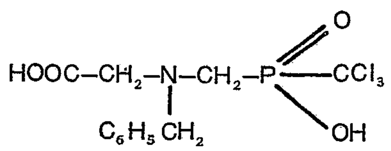

(Verbindung 4)

als weisses kristallines Produkt vom Smp. 194—195° (Zers.)

Analyse: $C_{11}H_{13}Cl_3NO_4P$ (360,5)

| | | | | | |
|---|---|---|---|---|---|
| ber: | C 36,64 | H 3,63 | N 3,88 | Cl 29,5 | P 8,59% |
| gef: | C 37,04 | H 3,77 | N 4,02 | Cl 27,47 | P 8,56% |

Beispiel 5

Nach der im Beispiel 1 beschriebenen Verfahrensweise erhält man aus 29,0 g (0,2 Mol) n-Propyldichlorphosphin, $C_3H_7PCl_2$, 60 ml Wasser; 40,3 g $C_6H_5CH_2$—NH—$CH_2CO_2H$, 34,3 g 35% $CH_2O$-Lösung und 60 ml konz. Salzsäure,nach dem Eindampfen am Rotävap 53,3 g (N-Benzylglycylmethyl)-propylphosphinsäure der Formel

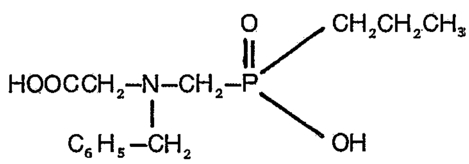

. (HCl) (Verbindung 5)

als weisse kristalline Substanz, welche nach Umkristallisieren aus Wasser bei 155-157°C unter Zersetzung schmilzt.

Beispiel 6

Nach der im Beispiel 1 beschriebenen Verfahrensweise erhält man aus 14,21 g (0,1 Mol) Phenylphosphoniger Säure

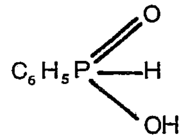

,

20,17 g (0,1 Mol) $C_6H_5CH_2$—NH—$CH_2COOH$—HCl, 15,81 g 38%-iger Formaldehydlösung (= 0,2 Mol $CH_2O$), 35 ml (0,35 Mol) konz. Salzsäure und 25 ml Wasser nach dem Stehenlassen bei 20° 31,4 g (88%) unreine (N-Benzylglycylmethyl)-phenylphosphinsäure der Formel

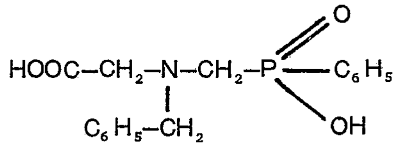

(Verbindung 6)

welch nach Umkristallisieren aus Wasser 20 g reine Kristalle vom Smp. 186—188° ergibt.

Analyse: $C_{16}H_{18}NO_4P$ (319,3)

| | | | | |
|---|---|---|---|---|
| ber: | C 60,19 | H 5,68 | N 4,39 | P 9,70% |
| gef: | C 60,1 | H 5,70 | N 4,40 | P 9,8% |

Diese Verbindung lässt sich als zweibasige Säure mit 2 Potentialsprüngen titrieren (erster Sprung bei pH 6,3; zweiter Sprung bei pH 10,2).

IR-Spektrum (in KBr): Banden bei 2,95 m$\mu$ (OH); 3,3 m$\mu$ ($C_6H_5$): 5,4 m$\mu$ (C=O) und 8,88 m$\mu$ (P=O).

Beispiel 7

153,9 g (0,5 Mol) der gemäss Beispiel 1 erhaltenen Verbindung 1 werden zwecks Abspaltung des Benzylrestes in 1,5 Liter Eisessig gelöst, mit 15 g 5%-iger Palladiumkohle als Katalysator versetzt und bei Raumtemperatur mit $H_2$ hydriert. Nach einer Stunde ist die Hydrierung beendet und es waren 105% der theoretisch notwendigen Wasserstoffmengen aufgenommen. Nach Abfiltrieren des Katalysators wird dieser zweimal mit 250 ml heissem Wasser extrahiert. Nach Eindampfen der wässerigen Lösung wird der Rückstand aus einem Wasser-Aceton-Gemisch umkristallisiert. Man erhält dabei 65,8 g Glycylmethyl-äthylphosphinsäure semi-hydrochlorid der Formel

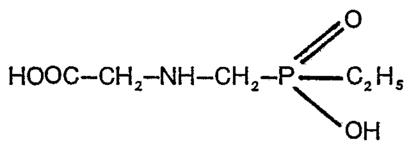

· 0,5 HCl (Verbindung 7)

vom Schmelzpunkt 192—194° (Zers.). Die Mutterlauge wird mit dem Filtrat der Hydrierlösung vereinigt und eingedampft. Nach Umkristallisieren des Rückstandes aus Wasser/Aceton erhalt man weitere 15,5 g der obigen Verbindung 7 vom Schmelzpunkt 189—192° (Zers.) so dass die Gesamtausbeute 81,3 g oder 74,7% beträgt.

Analyse: $C_5H_{12}NO_4P \cdot 0{,}5\ HCl$ (199,3)

| | | | | | |
|---|---|---|---|---|---|
| ber | C 30,12 | H 6,07 | N 7,03 | Cl 8,90 | P 15,54% |
| gef: | C 30,2 | H 6,2 | N 7,1 | Cl 8,90 | P 15,8% |

$^{31}P$ (in $D_2O$)—38,56 ppm

Die Verbindung 7 lässt sich mit $(CH_3)_4NOH$ in Wasser mit 2 Potentialsprüngen titrieren.

Den Monoäthylester (verestert an der Carbonsäuregruppe) dieser zweibasigen Säure erhält man durch Veresterung Mit Aethanol und Salzsäure. Das erhaltene Produkt ist das Hydrochlorid des Esters, von der Formel

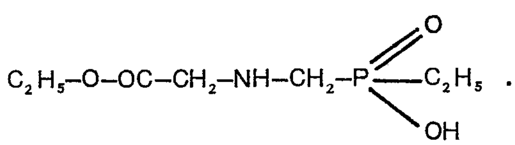

. HCl

und schmilzt bei 90—95° unter Zersetzung.

Beispiel 8

Aehnlich wie im Beispiel 7 werden 157,3 g der Verbindung 2 des Beispiels 2 in einem Gemisch aus 200 ml Wasser und 200 ml Aethanol mit 7 g 5%-iger Pd-Kohle und Wasserstoff katalytisch debenzyliert. Die Hydrierung war nach 4 1/2 Stunden beendet. Nach Abfiltrieren des Katalysators und Extraktion mit heissem Wasser erhält man nach Eindampfen des wässerigen Extraktes ein gelbes Oel, das aus Wasser/Aceton 1:10 kristallisiert. Man erhält 51 g (57%) weisse Kristalle vom Smp. 223—224° (Zers.) der gewünschten Methylphosphinsäure der Formel

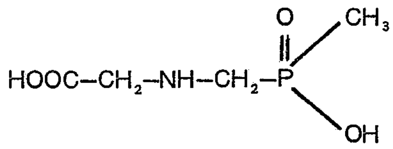

(Verbindung 8)

Analyse: $C_4H_{16}$ $NO_4$ P (267,1)

| | | | | |
|---|---|---|---|---|
| ber: | C 28,75 | H 6,03 | N 8,38 | P 18,54% |
| gef: | C 28,7 | H 6,3 | N 8,3 | 18,3% |

Die Verbindung lässt sich mit $(CH_3)_4N$—OH ebenfalls als zweibasige Säure mit 2 Potentialsprüngen titrieren. Das Isopropylaminsalz dieser Verbindung schmilzt bei 203—204° unter Zersetzung.

Beispiel 9

Werden nach dem im Beispiel 7 beschriebenen Hydrierungsverfahren 64,3 g der Verbindung 3 gemäss Beispiel 3 in einem Aethanol-Wasser (1:1)-Gemisch mit 12 g 5%iger Pd-Kohl katalytisch debenzyliert (Dauer 4 Stunden, Aufnahme 102% $H_2$), so erhält man nach Eindampfen des Filtrates 32,4 g (85%) eines viskosen Oeles,welches die Hydroxymethylglycylmethyl-phosphinsäure der Formel

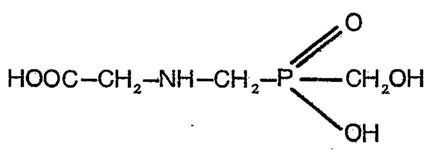

(Verbindung 9)

darstellt. Das tert.Butylaminsalz dieser Säure schmilzt bei 130° unter Zersetzung, das Cyclohexylaminsalz bei 70—80°C.

Beispiel 10

21,6 der Verbindung 4 des Beispiels 4 werden in 500 ml Eisessig mit 1 g 5%-iger Pd-Kohle wie in Beispiel 7 hydriert. Nach Aufnahme von 13% des theoretisch erforderlichen Wasserstoffs werden weitere 2 g Palladium-Kohle zugesetzt, bis 97% $H_2$ aufgenommen sind, was 17 Stunden Hydrierzeit erfordert. Der Katalysator wird durch Firtrieren entfernt, das Filtrat eingedampft und der gelbe Rückstand in Wasser gelöst. Beim Stehen kristallisieren 4 g eines Produktes aus, das noch Benzylgruppen enthält, und abfiltriert wird. Das Filtrat wird eingedampft und der Rückstand (12 g) aus Wasser/Aceton umkristallisiert. Man erhält schliesslich 7,43 g (45,8%) weisse Kristalle vom Schmelzpunkt 227—229° (Zers.), welche dem Trichlormethyl-derivat der Formel

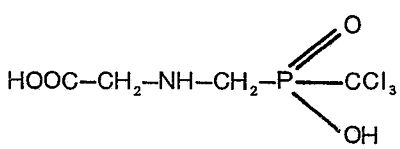

(Verbindung 10)

entsprechen.

Analyse: $C_4H_7Cl_3NO_4P$ (270,4)

| | | | | |
|---|---|---|---|---|
| ber: | C 17,77 | H 2,61 | N 5,18 | Cl 39,33% |
| gef: | C 18,2 | H 2,8 | N 5,3 | Cl 37,1% |

Verbindung 10 lässt sich als zweibasige Säure mit 2 Potentialsprüngen titrieren.

Das Mono-Isopropylaminsalz dieser Verbindung wird hergestellt durch Eindampfen einer wässerigen Lösung äquivalenter Mengen der obigen Phosphinsäure und Isopropylamin.

Beispiel 11

53,0 g der Verbindung 5 des Beispiels 5 werden in 530 ml Eisessig einer katalytischen Hydrierung mit 5 g 5%-iger Pd-Kohle unterworfen. Wenn sich die $H_2$-Aufnahme verlangsamt, wird neuer Katalysator zugesetzt. Nach 21 Stunden ist die Hydrierung beendigt. Nun wird der Katalysator abfiltriert und zweimal heiss mit Wasser extrahiert. Extrakt und Filtrat werden eingedampft und das zurückbleibende

braune Oel mit $H_2O$/Aceton angerieben, wobie es kristallisiert. Man erhält 27,0 g (70,7%)glycylmethyl-*n*-propyl-phosphinsäure der Formel

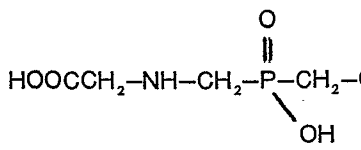

(Verbindung 11)

· 0,5HCl

die nach dem Umkristallisieren aus $H_2O$/Aceton bei 196—197° (Zersetzung) schmilzt.

Beispiel 12

12,77 g der Verbindung 6 gemäss Beispiel 6 werden in 230 ml Eisessig mit 1,3 g 5%-iger Pd-Kohle versetzt und bei Raumtemperatur mit Wasserstoff hydriert. Nach 3 Stunden ist die Hydrierung beendet und die theoretische Menge $H_2$ war aufgenommen. Der Katalysator wird abfiltriert und das Filtrat am Rotavap eingedampft. Es verbleiben 29,4 g grünlicher Festkörper, der in 180 ml Wasser heiss gelöst wird. Beim Abkühlen kristallisieren 5,9 g des Phenylderivates der Formel

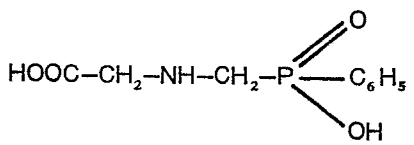

(Verbindung 12)

aus. Aus dem Filtrat gewinnt man durch Konzentrieren auf ca. 40 ml noch weitere 1,7 g dieser Säure. Die Totalausbeute von 7,6 g entspricht 83% d.TH. Fp. 248—250° (Zers.)

Analyse: $C_9H_{12}NO_4P$ (229,16)

| | | | | |
|---|---|---|---|---|
| ber: | C 48,17 | H 5,27 | N 6,11 | P 13,51% |
| gef: | C 46,95 | H 5,26 | N 6,09 | P 13,61% |

Auch diese Säure lässt sich mit $(CH_3)_4N$—OH als zweibasige Säure mit 2 Potentialsprüngen titrieren. Das Mono-Isopropylaminsalz dieser Säure, hergestellt durch Eindampfen einer wässerigen Lösung äquivalenter Mengen der Säure und Isopropylamin, schmilzt bei 194—197° unter Zersetzung (Ausbeute 97%).

Beispiel 13

Entsprechend der Verfahrensweise des Beispiels 1 werden 28,4 g (0,2 Mol) Phenylphosphonige Säure

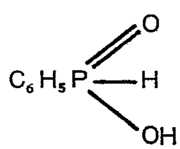

26,6 g (0,2 Mol) $HN(CH_2COOH)_2$, 31,6 g 38%-ige Formaldehydlösung (0,4 Mol) 20 ml Wasser und 30 ml konz. Salzsäure (0,3 Mol) 2 Stunden am Rückfluss umgesetzt. Nach der Beendigung der Formaldehyd-Zugabe kristallisiert das Endprodukt aus. Es wird abfiltriert,mehrmals mit Wasser gewaschen und getrocknet. Die Ausbeute an der erhaltenen Verbindung der Formel

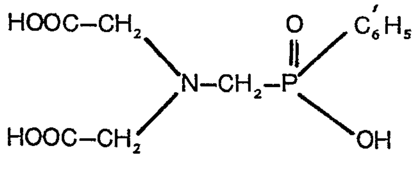

(Verbindung 13)

beträgt 50,9 g (88,3%). Diese dreibasige Säure bildet weisse Kristalle vom Schmelzpunkt 225—230° (Zers.)

Analyse: $C_{11}G_{14}NO_6P$ (287,2)

ber: C 46,0 H 4,92 N 4,88%
gef: C 45,4 H 4,9 N 4,9%

### Beispiel 14

294 g der Verbindung 4 des Beispiels 4 werden in 3,5 l Eisessig mit 30 g 5%-iger Pd-Kohle wei im Beispiel 7 hydriert. Nach Aufnahme von 15% des theoretisch erforderlichen Wasserstoffs wird die Temperatur auf 30° erhöht und weitere 20 g Pd-Kohle zugesetzt. Nach Aufnahme von 39% des theoretisch erforderlichen Wasserstoffs werden nochmals 100 g Pd-Kohle zugesetzt, bis 102% $H_2$ aufgenommen sind, was 44 Stunden Hydrierzeit erfordert. Der Katalysator wird durch Filtrieren entfernt, das Filtrat eingedampft und der Rückstand in 650 ml heissem Eisessig gelöst. Beim Stehen über Nacht kristallisiert 1 g weisser Feststoff vom Smp. 230° aus. Das Filtrat wird konzentriert und mit Aceton versetzt. Dabei kristallisieren weitere 36,6 g (19,5%) weisse Kristalle vom Schmelzpunkt 321° (Zers.) aus, welche dem Dichlormethylderivat der Formel

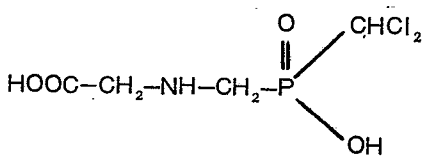

(Verbindung 14)

entsprechen.

Analyse: $C_4H_8Cl_2NO_4P$ (235,99)

ber: C 20,36 H 3,42 N 5,94 Cl 30,05%
gef: C 20,35 H 3,39 N 6,12 Cl 29,84%

Die Verbindung wurde weiterhin durch die NMR-Spektren charakterisiert

$^1$H—NMR (in $D_2O$): $PCH_2$ bei 7,73 ppm ($J_{PCH}$ $^{10}$Hz,2H); $NCH_2C$ bei 4,27 ppm (s,2H); $PCHCl_2$ bei 6,23 ppm ($J_{PCH}$ 2Hz, 1H); OH bei 4,97 ppm(s)

$^{31}$P—NMR (in $D_2O$):—18,44 ppm

Das Monoisopropylaminsalz erhält man beim Eindampfen einer wässerigen Lösung der Säure mit überschüssigem Isopropylamin als kristallines Salz.

Nachstehend sind noch weitere hergestellte erfindungsgemässe Derivate (Salze und Ester) der Formel I aufgeführt.

| Verbindung No. | Formel oder Bezeichnung | Schmelzpunkt |
|---|---|---|
| 15 | 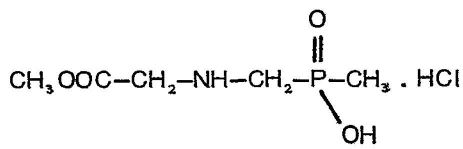 | 110–112° |
| 16 | 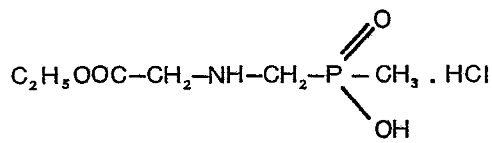 | 125° |
| 17 | Isopropylaminsalz der Verbindung No. 9 | Oel |
| 18 | Isopropylaminsalz der Verbindung No. 2 | viskos |
| 19 | 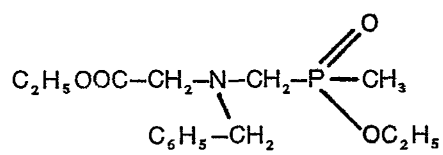 | Sdp. 200°/0,1 Torr |
| 20 | 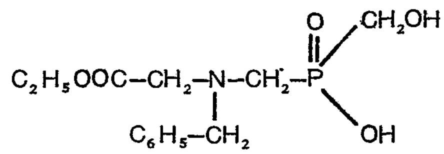 | Harz |
| 21 | tert.Butylaminsalz davon | 78–83° |
| 22 | 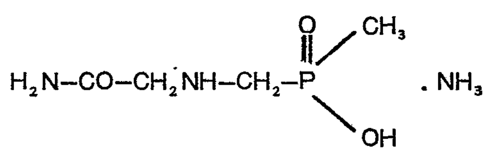 (hergestellt durch Erhitzen der Säure mit überschüssiger konzentrierter Ammoniaklösung) | weisser Festkorper |
| 23 | 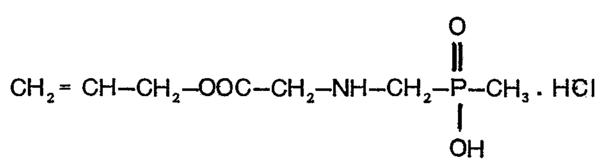 | fest, wasserlöslich |
| 24 | 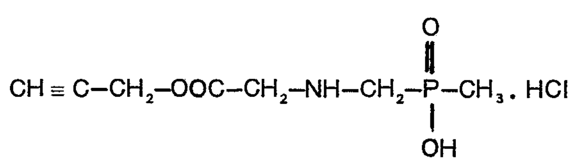 | fest, wasserlöslich |
| 25 | 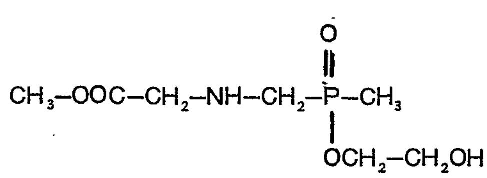 (hergestellt aus Verbindung No. 15 mit Aethylenoxyd in Dioxan bei 50° und Abdampfen des Lösungsmittels) | Oel |

Es sind auch noch die Amide anderer Phosphinsäuren, sowie die Natriumsalze, die Methyl-, Aethyl- und Iso- propylester mehrerer dieser Säuren hergestellt worden.

Die neuen Derivate der Formel I, sowohl diejenigen in denen R Wasserstoff ist, als auch jene, worin R einen Substituenten (Benzyl usw.) darstellt, besitzen herbizide und pflanzenwachstumsregulierende Eigenschaften. Sowohl die freien Glycylmethyl-phosphinsäuren als auch insbesondere Alkalimetall- und Aminsalze sowie ihre Ester können insbesondere als Kontaktherbizide und Wuchshemmer in post-emergenter Applikation verwendet werden.

Einige sind auch fungizid oder bakterizid wirksam.

Neben Säureadditionssalzen sind in erster Linie die Alkali- und Erdalkalimetallsalze, Eisensalze etc., die Salze organischer Amine, protonierter und quaternärer Stickstoffbasin als Wirkstoffe zu nennen, im Prinzip alle Kationen, die pflanzenphysiologisch verträglich sind einschliesslich solcher, die selbst wachstumschemmende Eigenschaften besitzen.

Die Erfindung betrifft auch herbizide und pflanzenwachstumsregulierende Mittel, welche ein neues Derivat der Formel I als Wirkstoff enthalten, sowie Verfahren zur totalen und selektiven Unkrautbekämpfung in Kulturpflanzenbeständen und zur Hemmung des Pflanzenwuchses von monocotylen und dicotylen Pflanzen, insbesondere zur Hemmung des Wachstums von Gräsern, Getreide, Soja und Zierpflanzen.

Die erfindungsgemässen Mittel können in den üblichen Formulierungen vorliegen, als Stäubemittel, Streumittel, Granulate, als dispergierbare Konzentrate, wie Spritzpulver, Emulsionen, Emulsionskonzentrate und Pasten, sowie als Lösungen, insbesondere in Wasser.

Die Herstellung dieser Formulierungen erfolgt mittels üblichen Träger- und Zuschlagstoffen nach bekannten Techniken.

Die bevorzugte Herbizid-Applikation der neuen Wirkstoffe und Mittel ist die post-emergente Anwendung als Kontaktherbizid. Einige Wirkstoffe werden in der Pflanze transloziert und eignen sich deshalb besonders zur Bekämpfung perennierender Unkräuter.

Unter der ebenfalls interessanten Anwendung zur Hemmung des Pflanzenwuchses ist eine Steuerung der natürlichen Pflanzenentwicklung zu verstehen, die eine Verlangsamung dieser Vorgänge bewirken. In der Pflanzenentwicklung (Seitentriebbildung, Blüte, Fruchtansatz etc.) können dabei künstlich retardierende Phasen erzeugt werden. Das Verfahren der Wuchsregulierung wird zu einem im Einzelfall zu bestimmenden Entwicklungszeitpunkt der Pflanze angewandet. Die Applikation der neuen Säuren und Derivate der Formel I und deren Salze kann vor oder nach dem Auflaufen der Pflanzen entweder bereits auf die Samen oder auf die Sämlinge, Wurzeln, Stengel, Blätter, Blüten oder andere Pflanzenteile erfolgen. Dies kann z.B. durch Aufbringen des Wirkstoffs selbst oder in Form eines Mittels auf die aufgelaufene Pflanze und/oder durch Behandlung des Nährmediums der Pflanze (Erdboden) geschehen.

Die von den neuen Wirkstoffen in erster Linie erzielte Wirkung besteht in der wünschenswerten Reduktion der Pflanzengrösse, insbesondere der Wuchshöhe. Im allgemeinen ist damit eine gewisse Aenderung der Pflanzenform verbunden. In unmittelbarem Zusammenhang zur Verminderung der Wuchshöhe erfährt die Pflanze aber eine Festigung. Blätter und Stengel sind kräftiger ausgebildet. Durch Verkürzung der Internodienabstände an monocotylen Pflanzen wird die Knickfestigkeit erhöht. Auf diese Weise können Ernteausfälle durch Gewittersturm, Dauerregen usw., die normalerweise zu einem Lagern des Getreides führen, weitgehend verhindert werden. Als Nebeneffekt führt verminderte Wuchshöhe bei Nutzpflanzen zu einer bedeutenden Einsparung an Düngemitteln. Im gleichen Masse gilt dies für Zierrasen, Sportrasen oder sonstige Grünanpflanzungen.

Ein weiteres Problem an reinen Graspflanzungen ist aber das des Grasschnitts selbst, sei es an Grünanlagen in Wohngegenden, auf Industriegelände oder an Autostrassen, Eisenbahndämmen oder Uferböschungen von Gewässern. In all diesen Fällen ist ein periodisches Schneiden des Rasens bzw. Grasbewuchses notwendig. Dies ist nicht nur im Hinblick auf Arbeitskräfte und Maschinen sehr aufwendig, sondern birgt im Verkehrsbereich erhebliche Gefahren für das detroffene Personal und die Verkehrsteilnehmer.

Es besteht daher gerade in Gebieten mit grossen Verkehrsnetzen ein dringendes Bedürfnis, die im Hinblick auf Verfestigung von Seitenstreifen und Böschungen an Verkehrswegen notwendige Grassnarbe einerseits zu erhalten und zu pflegen, andererseits aber mit einfachen Massanahmen während der gesamten Vegetationsperiode auf einer mittleren Wuchshöhe zu behalten. Dies wird durch Applikation der neuen Derivate der Formel I oder einem ihrer Salze auf sehr günstige Weise erreicht.

Die erfindungsgemäss zu verwendenden Wirkstoffe greifen also in das physiologische Geschehen des Pflanzenwachstums ein und stellen deshalb Wachstumsregulatoren dar, welche im Sinne einer Wachstumsverzögerung wirken.

Die verschiedenartigen Hemmwirkungen hängen wesentlich ab vom Zeitpunkt der Anwendung, bezogen auf das Entwicklungsstadium der Pflanzen, sowie von den angewendeten Konzentrationen. So können Wuchshemmer auch bewirken, dass die Nährstoffe in stärkeren Masse der Blüten- und Fruchtbildung zugute kommen, während das vegetative Wachstum eingeschränkt wird.

Besonders hervorzuheben ist neben der Wuchshemmung und Ertragssteigerung von Soja noch die Eignung vieler dieser Wirkstoffe zur Defoliation, z.B. von Baumwolle und als Tabakgeiztriebhemmer.

Die Wirkstoffe werden in der Regel als Mittel formuliert zur Anwendung gebracht, d.h. nach Zusatz von Träger- und anderen Stoffen.

Biologische Tests zum Nachweis der Brauchbarkeit als Herbizide und Wuchshemmer:

*Post-emergente Herbizid-Wirkung* (Kontaktherbizid)
Eine grössere Anzahl (mindestens 7) Unkräuter und Kulturpflanzen, sowohl monocotyle wie dicotyle, wurden nach dem Auflaufen (im 4-bis-6-Blattstadium) mit einer wässerigen Wirkstoffemulsion in Dosierungen von 0,5; 1; 2 und 4 kg Wirksubstanz pro Hektar auf die Pflanzen gespritzt und diese bei 24°—26°C und 45—60% rel. Luftfeuchtigkeit gehalten. 5 Tage und 15 Tage nach Behandlung wird der Versuch ausgewertet und das Ergebnis wie folgt bonitiert:

9 = Pflanzen ungeschädigt (wie unbehandelte Kontrolle)
1 = Pflanzen total abgestorben
8—2 = Zwischenstufen der Schädigung

Von den geprüften Verbindungen zeigte unter anderem das Isopropylaminsalz der Glycylmethyl)-methylphosphinsäure eine sehr ausgeprägte herbizide Wirkung auf Setaria, Lolium, Solanum, Sinapis, Stellaria etc.

*Wuchshemmer bei Gräser*
In Kunststoffschalen mit Erde-Torf-Sand-Gemisch (6:3:1) wurden Samen der Gräser Lolium perenne, Poa pratensis, Festuca ovina und Dactylis glomerata ausgesät und normal bewässert. Die aufgelaufenen Gräser wurden wöchentlich bis auf 4 cm Höhe zurückgeschnitten und 40 Tage nach der Aussaat und 1 Tag nach dem letzten Schnitt mit wässerigen Spritzbrühen eines Wirkstoffs der Formel I bespritzt. Die Wirkstoffmenge betrug umgerechnet 5 kg Aktivsubstanz pro Hektar. 10 und 21 Tage nach Applikation wurde das Wachstum der Gräser beurteilt.

*Wuchshemmung bei Getreide*
In Kunststoffbechern wurde Sommerweizen (Triticum aestivum), Sommergerste (Hordeum vulgare) und Roggen (Secale) in sterilisierter Erde angesät und im Gewächshaus gezogen. Die Getriedessprösslinge werden 5 Tage nach Aussaat mit einer Spritzbrühe des Wirkstoffs behandelt. Die Blattapplikation entsprach 6 kg Wirkstoff pro Hektar. Die Auswertung erfolgt nach 21 Tagen.

**Patentansprüche**

1. Neue Glycylmethyl-phosphinsäurederivate der Formel I

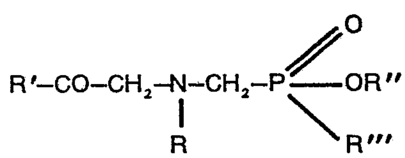

(I)

und ihre Salze, worin
- R — Wasserstoff, einen $C_1$—$C_6$ Alkylrest, Benzyl, Diphenylmethyl oder Triphenylmethyl oder die Gruppe HOOC—$CH_2$—,
- R′ — eine Gruppe —OH oder —$OR_1$, worin $R_1$ ein Kation, einen $C_1$—$C_6$ Alkylrest, einen $C_2$—$C_3$ Alkenylrest, den Propargylrest oder R′ die Aminogruppe,
- R″ — Wasserstoff, ein Kation, ferner nieder Alkyl oder Hydroxyalkyl, und
- R‴ — einen $C_1$—$C_4$ Alkylrest, der durch Halogen, Hydroxy- oder Carboxygruppen ein- oder mehrfach substituiert sein kann, oder einen gegebenenfalls substituierten Phenylrest bedeuten.

2. Glycylmethyl-phosphinsäurederivate gemäss Anspruch 1, worin in der Formel I R Wasserstoff und R‴ die Methyl-, Trichlormethyl-oder Hydroxymethylgruppe darstellt.

3. Verfahren zur Herstellung von Glycylmethyl-phosphinsäurederivaten der Formel I des Anspruchs 1, dadurch gekennzeichnet, dass man ein N-substituiertes Glycin der Formel II.

$$HOOC{-}CH_2{-}NH{-}R_2 \qquad (II)$$

worin $R_2$ einen $C_1$—$C_6$ Alkylrest, vorzugsweise einen abspaltbaren Alkylrest wie tert.Butyl, ferner ein Benzyl-, Di- oder Triphenylmethylrest oder die Gruppe —$CH_2COOH$ bedeutet, mit Formaldehyd und einer phosphonigen Säure der Formel III

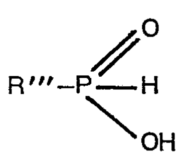

(III)

worin R''' wei unter Formel I definiert ist, in saurem wässerigem Milieu umsetzt und das erhaltene Glycylmethyl-phosphinsäurederivat der Formel Ia

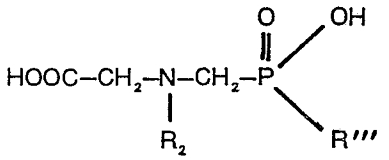

(Ia)

gewünschtenfalls durch Abspaltung einer abspaltbaren Gruppe $R_2$ und/oder weiteren Nachoperationen in ein Salz oder anderes Derivat der Formel I überführt.

4. Verfahren gemäss Anspruch 3, dadurch gekennzeichnet, dass man ein Ausgangsglycin der Formel II verwendet, in dem der Rest $R_2$ ein abspaltbarer Rest aus der Gruppe Benzyl, Di- oder Triphenylmethyl oder tert.Butyl ist.

5. Verfahren gemäss Anspruch 3, dadurch gekennzeichnet, dass die Umsetzung in stark salzsaurem Milieu bei einem pH kleiner 5 und bei Temperaturen von 20—100°C mit einem Ueberschuss an Formaldehyd und vorsugsweise unter Ausschluss von Sauerstoff durchgeführt wird.

6. Verfahren gemäss einem der Ansprüche 3 bis 5, dadurch gekennzeichnet, dass die phosphonige Säure der Formel III im Reaktionsgemisch dadurch gebildet wird, dass man ein Dihalogenphosphin der Formel R''' —$P(Hal)_2$, insbesondere ein Dichlorphosphin, ins wässerige Reaktionsgemisch einbringt, wobei durch Hydrolyse der Ausgangsstoff der Formel III in situ entsteht.

7. Verfahren gemäss Anspruchen 3 und 4, dadurch gekennzeichnet, dass man zur Abspaltung eines abspaltbaren Benzyl-, Diphenylmethyl- oder Triphenylmethylrestes $R_2$, das Zwischenprodukt der Formel Ia mit Wasserstoff katalytisch hydriert.

8. Verfahren gemäss Anspruch 7, dadurch gekennzeichent, dass $R_2$ in der Formel Ia die Benzylgruppe darstellt und dass man die katalytische Debenzylierung bei Temperaturen von 20 bis 50°C unter Verwendung von Palladiumkohle als Hydrierungskatalysator durchführt.

9. Verfahren gemäss Anspruchen 3 und 4 dadurch gekennzeichnet, dass man zur Abspaltung eines abspaltbaren Restes $R_2$ aus der Gruppe tert.Butyl, Benzyl, Di- oder Triphenylmethyl, das Zwischenprodukt der Formel Ia bei 100—200°C mit Bromwasserstoffsäure in einem Lösungsmittel behandelt.

10. Herbizides und Pflanzenwachstumsregulierendes Mittel, dadurch gekennzeichnet, dass es als Wirkstoff ein Glycylmethyl-phosphinsäurederivat der Formel I des Anspruchs 1, oder ein Salz eines solchen Derivates enthält.

11. Verwendung der Wirkstoffe der Formel I und der sie enthaltenden Mittel als Kontaktherbizide zur post emergenten selektiven Unkrautbekämpfung.

12. Verwendung der Wirkstoffe der Formel I und der sie enthaltenden Mittel zur Wuchshemmung von mono- und dicotylen Pflanzen.

## Claims

1. A novel glycylmethylphosphinic acid derivative of the formula I

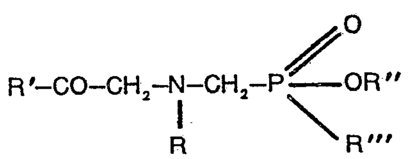

(I)

wherein

- R represents hydrogen, a $C_1$—$C_6$alkyl radical, benzyl, diphenylmethyl or triphenylmethyl, or the group HOOC—$CH_2$—,
- R' represents a —OH or —$OR_1$ group, in which $R_1$ represents a cation, a $C_1$—$C_6$alkyl radical, a $C_2$—$C_3$alkenyl radical, the propargyl radical, or the amino group,
- R'' represents hydrogen, a cation, and lower alkyl or hydroxyalkyl,
- R''' represents a $C_1$—$C_4$alkyl radical which can be mono- or polysubstituted by halogen atoms, hydroxyl or carboxyl groups, or represents a substituted or unsubstituted phenyl radical,

and a salt thereof.

2. A glycylmethylphosphinic acid derivative according to claim 1, wherein R in the formula I represents hydrogen and R''' represents the methyl, trichloromethyl or hydroxymethyl group.

3. A process for the production of a glycylmethylphosphinic acid derivative of the formula I in claim 1, characterised in that a N-substituted glycine of the formula II

$$HOOC{-}CH_2{-}NH{-}R_2 \qquad (II)$$

wherein $R_2$ represents a $C_1$—$C_6$alkyl radical, preferably a removable alkyl radical such as tert-butyl, and also represents a benzyl, diphenylmethyl or triphenylmethyl radical or the group —$CH_2COOH$, is reacted with formaldehyde and a phosphonic acid of the formula III

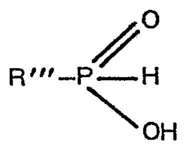

(III)

wherein R''' is as defined for formula I, in an aqueous acid medium, and the resultant glycylmethylphosphinic acid derivative of the formula Ia

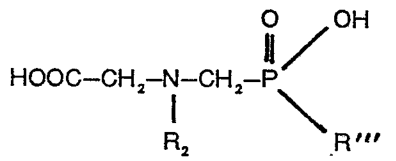

(Ia)

if desired by removing a removable group $R_2$ and/or by further subsequent operations, is converted into a salt or another derivative of the formula I.

4. A process according to claim 3, characterised in that the starting material is a glycine of the formula II, in which $R_2$ is a removable radical selected from the group consisting of benzyl, diphenylmethyl or triphenylmethyl, or tert-butyl.

5. A process according to claim 3, characterised in that the reaction is carried out in a strongly acid medium at a pH lower than 5 and in the temperature range from 20° to 100°C, with an excess of formaldehyde and preferably with the exclusion of oxygen.

6. A process according to any one of claims 3 to 5 characterised in that the phosphonous acid of the formula III is formed in situ by adding to the aqueous mixture a dihalophosphine of the formula R'''—$P(Hal)_2$, especially a dichlorophosphine, which is hydrolysed to the starting material of the formula III.

7. A process according to claims 3 and 4, characterised in that a removable benzyl, diphenylmethyl or triphenylmethyl radical $R_2$ is removed by catalytic hydrogenation of the intermediate of the formula Ia with hydrogen.

8. A process according to claim 7, characterised in that $R_2$ in the formula Ia represents the benzyl group and the catalytic debenzylation is carried out in the temperature range from 20° to 50° using palladium on carbon as hydrogenation catalyst.

9. A process according to claims 3 and 4, characterised in that a removable radical $R_2$ selected from the group consisting of tert-butyl, benzyl, diphenylmethyl or triphenylmethyl, is removed by treating the intermediate of the formula Ia at 100° to 200°C with hydrobromic acid in a solvent.

10. A herbicidal and plant growth-regulating composition, characterised in that it contains, as active ingredient, a glycylmethylphosphinic acid derivative of the formula I in claim I, or a salt thereof.

11. The use of a compound of the formula I, or of a composition containing such a compound, for the selective post-emergence control of weeds.

12. The use of a compound of the formula I, or of a composition containing such a compound, for inhibiting the growth of mono- and dicotyledonous plants.

**Revendications**

1. Nouveaux dérivés de l'acide glycylméthylphosphinique répondant à la formule I

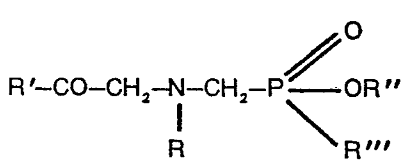

(I)

et leurs sels, dans lesquels

représente l'hydrogène, un reste alkyle en $C_1$—$C_6$, benzyle, diphénylméthyle ou triphénylméthyle ou le groupe HOOC—$CH_2$—,

R' représente un groupe —OH ou —$OR_1$ dans lequel $R_1$ est un cation, un reste alkyle en $C_1$—$C_6$, un reste alcényle en $C_2$—$C_3$, lesreste propargyle ou le groupe amino,

R'' représente l'hydrogène, un cation ou encore un groupe alkyle inférieur ou hydroxyalkyle, et

R''' représente un reste alkyle en $C_1$—$C_4$ qui peut être mono- ou poly-substitué par des halogènes, des groupes hydroxy ou carboxy, ou un reste phényle éventuellement substitué.

2. Dérivés de l'acide glycylméthyl-phosphinique selon la revendication 1 pour lesquels, dans la formule I, R représente l'hydrogène et R''' un groupe méthyle, trichlorométhyle ou hydroxyméthyle.

3. Procédé de préparation des dérivés de l'acide glyxylméthyl-phosphinique de formule I selon la revendication 1, caractérisé n ce que l'on fait réagir une glycine substituée à l'azote répondant à la formule II

$$HOOC{-}CH_2{-}NH{-}R_2 \qquad (II)$$

dans laquelle $R_2$ représente un reste alkyle en $C_1$—$C_6$, de préférence un reste alkyle éliminable tel que tert.- butyle, ou un reste benzyle, di- ou tri-phényl-méthyle, ou le groupe —$CH_2COOH$, avec le formaldéhyde et un acide phosphoneux répondant à la formule III

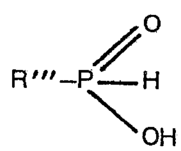

(III)

dans laquelle R''' a les significations indiquées en référence à la formule I, en milieu aqueux acide, après quoi, si on le désire, on convertir le dérivé d'acide glycylméthyl-phosphinique obtenu, répondant à la formule Ia

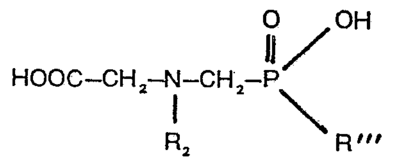

(Ia)

par séparation d'un groupe éliminable $R_2$ et/ou par d'autres opérations subséquentes, en un sel ou en un autre dérivé de formule I.

4. Procédé selon la revendication 3, caractérisé en ce qu'on utilise une glycine de départ de formule II dans laquelle le reste $R_2$ est un reste éliminable pris dans le groupe formé par les restes benzyle, di- ou tri-phénylméthyle ou tert.- butyle.

5. Procédé selon la revendication 3, caractérisé en ce que la réaction est effectuée en milieu fortement chlorhydrique à un pH inférieur à 5 et à des températures de 20 à 100°C avec un excès de formaldéhyde et de préférence à l'abri de l'oxygène.

6. Procédé selon l'une des revendications 3 à 5, caractérisé en ce que l'acide phosphoneux de formule III est formé dans le mélange de réaction par introduction d'une dihalogénophosphine de formule R''' —$P(Hal)_2$, en particulier d'une dichlorophosphine, dans le mélange de réaction aqueux, l'hydrolyse provoquant in situ la formation du composé de départ de formule III.

7. Procédé selon les revendications 3 et 4, caractérisé en ce que, pour séparer un reste benzyle, diphénylméthyle ou triphénylméthyle $R_2$ éliminable, on soumet le produit intermédiaire de formule Ia à hydrogénation catalytique.

8. Procédé selon la revendication 7, caractérisé en ce que le symbole $R_2$ de la formule Ia représente le groupe benzyle et en ce que la débenzylation catalytique est effectuée à des températures de 20 à 50°C à l'aide d'un catalyseur d'hydrogénation consistant en palladium sur charbon.

9. Procédé selon les revendications 3 et 4, caractérisé en ce que, pour séparer un reste éliminable $R_2$ pris dans le groupe formé par les restes tert.-butyle, benzyle, di- ou tri-phénylméthyle, on traite le produit intermédiaire de formule Ia par l'acide bromhydrique dans un solvent à des températures de 100 à 200°C.

10. Produit herbicide et régulateur de la croissance des végétaux, caractérisé en ce qu'il contient en tant que substance active un dérivé de l'acide glycylméthyl-phosphinique de formule I selon la revendication I ou un sel d'un tel dérivé.

11. Utilisation des substances actives de formule I et des produits en contenant en tant qu'herbicides de contact pour la lutte sélective contre les mauvaises herbes après sortie de terre.

12. Utilisation des substances actives de formule I et des produits en contenant pour l'inhibition de la croissance des végétaux mono- et dicotylédones.